# EUROPÄISCHE PATENTSCHRIFT

(11) **EP 2 481 260 B1**
(45) Veröffentlichungstag und Bekanntmachung des Hinweises auf die Patenterteilung: **22.10.2014**
(21) Anmeldenummer: 10754954.5
(22) Anmeldetag: 22.09.2010
(51) Int. Cl.: H05B 6/06, H05B 6/36

(54) **VERFAHREN ZUM EINSTELLEN EINER HEIZLEISTUNGSABGABE EINER INDUKTIONSHEIZEINRICHTUNG SOWIE ZUGEHÖRIGE INDUKTIONSHEIZEINRICHTUNG**
METHOD FOR ADJUSTING A HEATING POWER OUTPUT OF AN INDUCTION HEATING APPLIANCE AND CORRESPONDING INDUCTION HEATING APPLIANCE
PROCÉDÉ DE RÉGLAGE D'UNE PUISSANCE DE CHAUFFE FOURNIE PAR UN DISPOSITIF DE CHAUFFAGE PAR INDUCTION ET DISPOSITIF DE CHAUFFAGE PAR INDUCTION CORRESPONDANT

(30) Priorität: 24.09.2009 DE 102009048490
(43) Veröffentlichungstag der Anmeldung: 01.08.2012
(73) Patentinhaber: E.G.O. Elektro-Gerätebau GmbH, 75038 Oberderdingen (DE)
(72) Erfinder: LANG, Steffen, 75038 Oberderdingen (DE)
(74) Vertreter: Patentanwälte Ruff, Wilhelm, Beier, Dauster & Partner
(86) Internationale Anmeldenummer: PCT/EP2010/063948
(87) Internationale Veröffentlichungsnummer: WO 2011/036168

(56) Entgegenhaltungen:
- EP-A1- 0 188 980
- EP-A1- 0 713 350
- FR-A1- 2 442 566
- FR-A1- 2 486 345

## Beschreibung

Die Erfindung betrifft ein Verfahren zum Einstellen einer Heizleistungsabgabe einer Induktionsheizeinrichtung sowie eine zugehörige Induktionsheizeinrichtung.

Bei Induktionsheizeinrichtungen wird mittels einer Induktionsheizspule ein magnetisches Wechselfeld erzeugt, welches in einem zu beheizenden Kochgefäß mit einem Boden aus ferromagnetischem Material Wirbelströme induziert und Ummagnetisierungsverluste bewirkt, wodurch das Kochgefäß erhitzt wird.

Die Induktionsheizspule ist Bestandteil eines Schwingkreises, der die Induktionsheizspule und einen oder mehrere Kondensatoren umfasst. Die Induktionsheizspule ist üblicherweise als flächige, spiralförmig gewickelte Spule mit zugehörigen Ferrit-Kernen ausgeführt und beispielsweise unter einer Glaskeramikoberfläche eines Induktionskochfelds angeordnet. Die Induktionsheizspule bildet hierbei in Verbindung mit dem zu beheizenden Kochgeschirr einen induktiven und einen resistiven Teil des Schwingkreises.

Zur Ansteuerung bzw. Anregung des Schwingkreises wird zunächst eine niederfrequente Netzwechselspannung mit einer Netzfrequenz von 50Hz bzw. 60Hz gleichgerichtet und anschließend mittels Halbleiterschaltern in ein Anregungssignal höherer Frequenz umgesetzt. Das Anregungssignal ist üblicherweise eine Rechteckspannung mit einer Frequenz in einem Bereich von 20kHz bis 50kHz. Eine Schaltung zur Erzeugung des Anregungssignals wird auch als (Frequenz-)Umrichter bezeichnet.

Zum Einstellen einer Heizleistungsabgabe der Induktionsheizeinrichtung sind unterschiedliche Verfahren bekannt.

Bei einem ersten Verfahren wird eine Frequenz des Anregungssignals bzw. der rechteckförmigen Spannung in Abhängigkeit von der abzugebenden Heizleistung bzw. vom gewünschten Leistungsumsatz verändert. Dieses Verfahren zur Einstellung der Heizleistungsabgabe macht von der Tatsache Gebrauch, dass bei einer Anregung des Schwingkreises mit dessen Resonanzfrequenz eine maximale Heizleistungsabgabe erfolgt. Je größer die Differenz zwischen der Frequenz des Anregungssignals und der Resonanzfrequenz des Schwingkreises wird, desto kleiner wird die abgegebene Heizleistung.

Wenn die Induktionsheizeinrichtung jedoch mehrere Schwingkreise aufweist, beispielsweise, wenn die Induktionsheizeinrichtung ein Induktionskochfeld mit unterschiedlichen Induktionskochstellen bildet, und unterschiedliche Heizleistungen für die Schwingkreise eingestellt sind, können durch Überlagerung der unterschiedlichen Frequenzen der Anregungssignale Schwebungen verursacht werden, die zu störenden Geräuschen führen können.

Ein Verfahren zur Heizleistungseinstellung, welches Störgeräusche aufgrund derartiger Schwebungen vermeidet, ist eine Pulsweitenmodulation des Anregungssignals bei konstanter Erregerfrequenz, bei dem ein Effektivwert einer Heizleistung mittels Veränderung der Pulsbreite des Anregungssignals eingestellt wird. Bei einer derartigen Effektivwertsteuerung durch Veränderung der Pulsbreite bei konstanter Erregerfrequenz entstehen jedoch hohe Ein- und Ausschaltströme in den Halbleiterschaltern, wodurch ein breitbandiges und energiereiches Störspektrum verursacht wird.

Die DE 26 11 489 A1 und die EP 0 188 980 B1 zeigen jeweils Induktionsheizeinrichtungen mit einstellbarer Heizleistungsabgabe, wobei zur Einstellung der Heizleistungsabgabe eine wirksame Induktivität eines Transduktors verändert wird. Die Induktionsheizspule und der Transduktor sind voneinander getrennte Bauelemente und bilden einen induktiven Spannungsteiler, dessen Teilerverhältnis zum Einstellen der Heizleistungsabgabe verändert wird.

Der Erfindung liegt die Aufgabe zugrunde, ein Verfahren zum Einstellen einer Heizleistungsabgabe einer Induktionsheizeinrichtung sowie eine zugehörige Induktionsheizeinrichtung zur Verfügung zu stellen, die eine zuverlässige Einstellung einer Heizleistungsabgabe bei vergleichsweise geringem Störspektrum und keinen bzw. reduzierten Störgeräuschen ermöglichen.

Die Erfindung löst diese Aufgabe durch ein Verfahren mit den Merkmalen des Anspruchs 1 und eine Induktionsheizeinrichtung mit den Merkmalen des Anspruchs 4.

Bevorzugte Ausführungsformen sind Gegenstand der Unteransprüche, deren Wortlaut hiermit durch Bezugnahme zum Gegenstand der Beschreibung gemacht wird, um unnötige Wiederholung zu vermeiden.

Bei dem erfindungsgemäßen Verfahren wird eine Heizleistungsabgabe bzw. Heizleistung einer Induktionsheizeinrichtung, die mindestens einen Schwingkreis mit einer Induktionsheizspule umfasst, dadurch eingestellt, dass eine Resonanzfrequenz des mindestens einen Schwingkreises verändert wird. Die Veränderung der Resonanzfrequenz des Schwingkreises bewirkt, dass bei gleichbleibender Frequenz eines Anregungssignals des Schwingkreises eine Differenz zwischen Resonanzfrequenz und Frequenz des Anregungssignals verändert wird, wodurch sich die abgegebene Heizleistung verändert. Wenn die Resonanzfrequenz in Richtung der Anregungsfrequenz verändert wird, d.h. die Frequenzdifferenz verkleinert wird, nimmt die abgegebene Heizleistung zu, andernfalls nimmt sie ab.

Die Resonanzfrequenz des Schwingkreises wird verändert, indem eine induktive Komponente der Induktionsheizspule bzw. des Schwingkreises verändert wird. Die Induktionsheizspule bildet somit einen Transduktor. Ein Transduktor ist allgemein ein elektronisches Bauelement, dessen wirksame Induktivität mittels eines Steuersignals veränderbar ist. Der Transduktor bzw. die Induktionsheizspule wird mittels eines Steuerstroms zur Veränderung seiner bzw. ihrer Induktivität angesteuert.

In einer Weiterbildung wird der Schwingkreis mit einem periodischen Anregungssignal beaufschlagt, dessen Frequenz konstant ist. Die konstante Frequenz kann beispielsweise aus einem Frequenzbereich von 20kHz bis 50kHz ausgewählt sein. Bevorzugt ist das Anregungssignal ein Rechteckspannungssignal, dessen Tastgrad konstant ist. Die Heizleistungsabgabe bzw. Heizleistung wird für diesen Fall ausschließlich durch geeignetes Verändern der Resonanzfrequenz des Schwingkreises eingestellt.

Die erfindungsgemäße Induktionsheizeinrichtung mit einstellbarer Heizleistungsabgabe umfasst mindestens einen Schwingkreis, der eine Induktionsheizspule umfasst. Erfindungsgemäß ist eine Heizleistungseinstelleinrichtung vorgesehen, die dazu ausgebildet ist, zum Einstellen einer Heizleistungsabgabe eine Resonanzfrequenz des Schwingkreises zu verändern, indem eine induktive Komponente der Induktionsheizspule mittels eines Steuerstroms verändert wird.

Die Induktionsheizspule bildet einen Transduktor, der mittels des Steuerstroms zur Veränderung seiner Induktivität angesteuert wird. Es ist ein der Induktionsheizspule zugeordneter Ferrit-Kern zur Feldführung vorgesehen, auf dem Steuerwicklungen angeordnet sind, wobei die Steuerwicklungen mit dem Steuerstrom beaufschlagt sind, um die Induktivität des Transduktors einzustellen.

In einer Weiterbildung umfasst die Induktionsheizeinrichtung einen (Frequenz-) Umrichter, der dazu ausgebildet ist, den Schwingkreis mit einem periodischen Anregungssignal zu beaufschlagen, dessen Frequenz und/oder Tastgrad konstant ist.

In einer Weiterbildung umfasst die Induktionsheizeinrichtung mehrere Schwingkreise, die jeweils eine zugehörige Induktionsheizspule umfassen, wobei die Heizleistungseinstelleinrichtung dazu ausgebildet ist, zur Einstellung der Heizleistungsabgabe eines jeweiligen Schwingkreises eine Resonanzfrequenz des jeweiligen Schwingkreises zu verändern, wobei die jeweiligen Schwingkreise mit Anregungssignalen mit identischer Frequenz und/oder identischem Tastgrad beaufschlagt sind. Auf diese Weise werden Störgeräusche aufgrund von Überlagerungen der jeweiligen Anregungssignale wirksam vermieden.

Die Erfindung wird nachfolgend unter Bezugnahme auf die Zeichnungen beschrieben, die bevorzugte Ausführungsformen der Erfindung darstellen. Hierbei zeigt schematisch:
- Fig. 1: eine Ansicht von unten auf eine Induktionsheizspule, deren wirksame Induktivität steuerbar ist, und
- Fig. 2: ein Prinzipschaltbild einer Induktionsheizeinrichtung mit der in Fig. 1 gezeigten Induktionsheizspule.

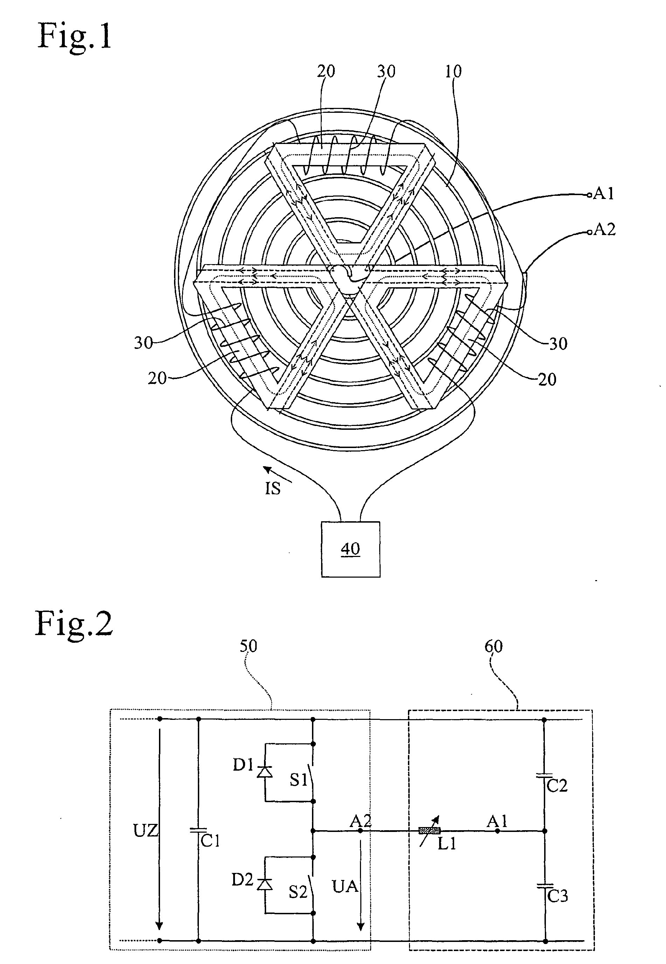

Fig. 1 zeigt eine Ansicht von unten auf eine Induktionsheizspule, deren wirksame Induktivität steuerbar ist. Die gezeigte Induktionsheizspule umfasst eine ebene, flächige, spiralig gewickelte Nutzwicklung 10 mit Anschlüssen A1 und A2, unterhalb der Nutzwicklung 10 angeordnete Ferrit-Kerne 20 zur Feldführung, auf denen Steuerwicklungen 30 angeordnet sind, und eine Steuersignal-Erzeugungseinrichtung 40, die einen Steuerstrom IS erzeugt, mit dem die Steuerwicklungen 30 beaufschlagt sind. Die Induktionsheizspule ist Teil eines Schwingkreises, der nachfolgend unter Bezugnahme auf Fig. 2 näher beschrieben wird.

Die in Fig. 1 dargestellte Induktionsheizspule bildet einen Transduktor, d.h. ein elektronisches Bauelement, dessen wirksame Induktivität mittels des Steuerstroms IS steuerbar bzw. einstellbar ist. Eine Veränderung der wirksamen Induktivität der Induktionsheizspule bewirkt eine Veränderung einer Resonanzfrequenz des die Induktionsheizspule enthaltenden Schwingkreises, wodurch eine Heizleistungsabgabe der Induktionsheizeinrichtung ebenfalls verändert wird.

Durch das Steuersignal bzw. den Steuerstrom IS wird eine magnetische Leitfähigkeit der Ferrit-Kerne 20 verändert, wodurch eine wirksame Induktivität der Induktionsheizspule bzw. des Transduktors verändert wird. Eine gleichsinnige Überlagerung des durch den Steuerstrom IS bewirkten magnetischen Steuerfelds mit dem von der Nutzwicklung 10 bewirkten magnetischen Feld führt zu einer magnetischen Sättigung der Ferrit-Kerne 20 und damit zu einer starken Verminderung der wirksamen Induktivität der Induktionsheizspule. Eine gegensinnige Überlagerung der genannten Felder bewirkt eine Kompensation und damit eine Beibehaltung bzw. eine geringfügige Erhöhung der wirksamen Induktivität der Induktionsheizspule.

Aufgrund der dargestellten, vorteilhafte Anordnung der Steuerwicklungen 30 wird verhindert, dass in den Steuerwicklungen 30 aufgrund des durch die Nutzwicklung 10 erzeugten Felds eine Spannung induziert wird, wodurch die Steuersignal-Erzeugungseinrichtung 40 einfach ausgeführt sein kann.

Die in Fig. 1 gezeigte Induktionsheizspule kann unterhalb einer Glaskeramikoberfläche eines nicht gezeigten Induktionskochfelds angeordnet sein, wobei das Induktionskochfeld mehrere Kochstellen aufweisen kann, denen jeweils eine oder mehrere derartige Induktionsheizspulen zugeordnet sein können.

Fig. 2 zeigt ein Prinzipschaltbild einer Induktionsheizeinrichtung, welche die in Fig. 1 gezeigte Induktionsheizspule umfasst. Die in Fig. 1 dargestellte Induktionsheizspule ist in Fig. 2 durch ihr elektrisches Ersatzschaltbild in Form einer einstellbaren Induktivität L1 dargestellt.

Die Induktionsheizeinrichtung umfasst einen herkömmlichen Umrichter 50, der aus einer Netzwechselspannung zunächst eine gleichgerichtete und mittels eines Zwischenkreiskondensators C1 gepufferte Zwischenkreisspannung UZ erzeugt, wobei mittels Halbleiterschaltern S1 und S2 und zugehörigen Freilaufdioden D1 und D2 ein hochfrequentes Anregungssignal in Form einer rechteckförmigen Anregungsspannung UA mit konstanter Frequenz und konstantem Tastverhältnis erzeugt wird.

Die Anregungsspannung UA dient zur Anregung eines Schwingkreises 60, der die Induktionsheizspule L1 und Kondensatoren C2 und C3 umfasst, die in der dargestellten Weise verschaltet sind. Die Kondensatoren C2 und C3 sind in Serie zwischen die Zwischenkreisspannung UZ eingeschleift, wobei ein Verbindungsknoten der Kondensatoren C2 und C3 mit dem Anschluss A1 der Nutzwicklung 10 bzw. der Induktionsheizspule L1 verbunden ist. Der Anschluss A2 der Nutzwicklung 10 bzw. der Induktionsheizspule L1 ist mit einem Verbindungsknoten der Halbleiterschalter S1 und S2 verbunden und mit der Anregungsspannung UA beaufschlagt.

Die Induktionsheizspule L1 ändert ihre wirksame Induktivität in Abhängigkeit vom Steuerstrom IS und bildet folglich einen Transduktor. Die an ein nicht näher dargestelltes ferromagnetisches Kochgefäß abgegebene Heizleistung hängt von einer Differenz zwischen der Frequenz der Anregungsspannung UA und der Resonanzfrequenz des Schwingkreises 60 ab. Die Resonanzfrequenz des Schwingkreises 60 hängt wiederum von den Kapazitäten der Kondensatoren C2 und C3 und der wirksamen Induktivität der Induktionsheizspule L1 ab. Die wirksame Induktivität der Induktionsheizspule L1 wird neben dem Steuerstrom IS auch noch durch die magnetischen Eigenschaften des zu beiheizenden Kochgeschirrs bestimmt.

In Fig. 2 ist lediglich ein Schwingkreis 60 dargestellt. Es versteht sich, dass weitere, nicht gezeigte Schwingkreise vorhanden sein können, die in entsprechender Weise realisiert sein können.

Die Induktionsheizeinrichtung kann Bestandteil eines Induktionskochfeldes mit mehreren Induktionskochstellen sein.

Zur Veränderung der Resonanzfrequenz des Schwingkreises 60 kann zusätzlich oder alternativ zur Änderung der wirksamen Induktivität der Induktionsheizspule L1 auch eine Kapazität des Kondensators C1 und/oder C2 verändert werden.

Gegebenenfalls kann zur Formung eines Störspektrums die Frequenz der Anregungsspannung UA zwischen unterschiedlichen Frequenzwerten umgeschaltet werden. Dies dient jedoch nicht der Heizleistungseinstellung. Für diesen Fall kann es notwendig sein, die Resonanzfrequenz des Schwingkreises 60 durch Ändern des Steuerstroms IS geeignet nachzuführen.

Die gezeigten Ausführungsformen ermöglichen eine Einstellung einer Heizleistungsabgabe bei vergleichsweise geringem Störspektrum und keinen bzw. reduzierten Störgeräuschen.

## Patentansprüche

1. Verfahren zum Einstellen einer Heizleistungsabgabe einer Induktionsheizeinrichtung, die mindestens einen Schwingkreis (60) mit einer Induktionsheizspule (L1) umfasst, wobei die Induktionsheizspule (L1) einen Transduktor bildet, der mittels eines Steuerstroms (IS) zur Veränderung seiner Induktivität angesteuert wird, wobei der Induktionsheizspule (L1) ein Ferrit-Kern (20) zugeordnet ist, auf dem Steuerwicklungen (30) angeordnet sind, wobei die Steuerwicklungen (30) mit dem Steuerstrom (IS) beaufschlagt sind, um die Induktivität des Transduktors einzustellen, wobei zur Heizleistungseinstellung eine Resonanzfrequenz des mindestens einen Schwingkreises (50) verändert wird, indem die Induktivität des Transduktors mittels des Steuerstroms (IS) verändert wird.

2. Verfahren nach Anspruch 1, **dadurch gekennzeichnet, dass** der Schwingreis mit einem periodischen Anregungssignal (UA) beaufschlagt wird, dessen Frequenz konstant ist.

3. Verfahren nach Anspruch 1 oder 2, **dadurch gekennzeichnet, dass** das Anregungssignal ein Rechteckspannungssignal ist, dessen Tastgrad konstant ist.

4. Induktionsheizeinrichtung mit einstellbarer Heizleistungsabgabe, mit
- mindestens einem Schwingkreis (60), der eine Induktionsheizspule (L1) umfasst, wobei die Induktionsheizspule (L1) einen Transduktor bildet, der mittels eines Steuerstroms (IS) zur Veränderung seiner Induktivität angesteuert wird,
- einem der Induktionsheizspule zugeordneten Ferrit-Kern (20), auf dem Steuerwicklungen (30) angeordnet sind, wobei die Steuerwicklungen (30) mit dem Steuerstrom (IS) beaufschlagt sind, um die Induktivität des Transduktors einzustellen, und
- einer Heizleistungseinstelleinrichtung, die dazu ausgebildet ist, zur Heizleistungseinstellung eine Resonanzfrequenz des mindestens einen Schwingkreises (50) zu verändern, indem die Induktivität des Transduktors mittels des Steuerstroms (IS) verändert wird.

5. Induktionsheizeinrichtung nach Anspruch 4, **gekennzeichnet durch** einen Umrichter (50), der dazu ausgebildet ist, den Schwingreis mit einem periodischen Anregungssignal (UA) zu beaufschlagen, dessen Frequenz konstant ist.

6. Induktionsheizeinrichtung nach Anspruch 4 oder 5, **dadurch gekennzeichnet, dass** mehrere Schwingkreise vorgesehen sind, die jeweils eine Induktionsheizspule umfassen, wobei die Heizleistungseinstelleinrichtung dazu ausgebildet ist, zur Einstellung der Heizleistungsabgabe eine Resonanzfrequenz des jeweiligen Schwingkreises zu verändern, wobei die jeweiligen Schwingkreise mit Anregungssignalen mit identischer Frequenz beaufschlagt sind.

## Claims

1. A method for adjusting a heating power output of an induction heating appliance which comprises at least one resonant circuit (60) including an induction heating coil (L1), wherein the induction heating coil (L1) constitutes a transductor which is controlled by means of a control current (IS) for variation of the inductance of the transductor, wherein a ferrite core (20) is assigned to the induction heating coil (L1), wherein control windings (30) are arranged on the ferrite core (20), wherein the control current (IS) is applied to the control windings (30) to adjust the inductance of the transductor, wherein for heating power adjustment a resonant frequency of the at least one resonant circuit (50) is varied by varying the inductance of the transductor by means of the control current (IS).

2. The method according to claim 1, **characterized in that** a periodic excitation signal (UA) is applied to the resonant circuit, the signal having a constant frequency.

3. The method according to claim 1 or 2, **characterized in that** the excitation signal is a square wave voltage signal having a constant pulse duty factor.

4. An induction heating appliance having adjustable heating power output, comprising
- at least one resonant circuit (60) including an induction heating coil (L1), wherein the induction heating coil (L1) constitutes a transductor which is controlled by means of a control current (IS) for variation of the inductance of the transductor,
- a ferrite core (20) assigned to the induction heating coil, wherein control windings (30) are arranged on the ferrite core (20), wherein the control current (IS) is applied to the control windings (30) to adjust the inductance of the transductor, and
- a heating power adjustment device configured to vary a resonant frequency of the at least one resonant circuit (50) for heating power adjustment in that the inductance of the transductor is varied by means of the control current (IS).

5. The induction heating appliance according to claim 4, **characterized by** a converter (50) which is configured so as to apply a periodic excitation signal (UA) to the resonant circuit, the excitation signal (UA) having a constant frequency.

6. The induction heating appliance according to claim 4 or 5, **characterized in that** a plurality of resonant circuits are provided, each comprising an induction heating coil, wherein the heating power adjustment device is configured so as to vary a resonant frequency of the respective resonant circuit for adjustment of the heating power output, wherein excitation signals of identical frequency are applied to the respective resonant circuits.

## Revendications

1. Procédé de réglage de la puissance de chauffage délivrée par un dispositif de chauffage par induction qui comporte au moins un circuit oscillant (60) doté d'une bobine (L1) de chauffage par induction,
la bobine (L1) de chauffage par induction formant un transducteur commandé au moyen d'un courant de commande (IS) en vue de modifier son inductance,
un noyau (20) en ferrite sur lequel les enroulements de commande (30) sont disposés étant associé à la bobine (L1) de chauffage par induction,
le courant de commande (IS) pouvant être appliqué sur les enroulements de commande (30) pour définir l'inductance du transducteur,
la fréquence de résonance du ou des circuits oscillants (50) étant modifiée pour établir la puissance de chauffage en modifiant l'inductance du transducteur au moyen du courant de commande (IS).

2. Procédé selon la revendication 1, **caractérisé en ce qu'**un signal périodique d'excitation (UA) dont la fréquence est constante est appliqué sur le circuit oscillant.

3. Procédé selon les revendications 1 ou 2, **caractérisé en ce que** le signal d'excitation est un signal rectangulaire de tension dont la cadence est constante.

4. Dispositif de chauffage par induction à puissance de chauffage réglable, présentant
au moins un circuit oscillant (60) qui comporte une bobine (L1) de chauffage par induction, la bobine (L1) de chauffage par induction formant un transducteur qui est commandé au moyen d'un courant de commande (IS) en vue de modifier son inductance,
un noyau (20) en ferrite sur lequel des enroulements de commande (30) sont disposés, associé à la bobine de chauffage par induction, un courant de commande (IS) étant appliqué sur les enroulements de commande (30) pour régler l'inductance du transducteur et
un dispositif de réglage de la puissance de chauffage configuré pour modifier la fréquence de résonance du ou des circuits oscillants (50) en vue de régler la puissance de chauffage en modifiant l'inductance du transducteur au moyen du courant de commande (IS).

5. Dispositif de chauffage par induction selon la revendication 4, **caractérisé par** un convertisseur (50) configuré pour appliquer sur le circuit oscillant un signal périodique d'excitation (UA) de fréquence constante.

6. Dispositif de chauffage par induction selon les revendications 4 ou 5, **caractérisé en ce qu'**il présente plusieurs circuits oscillants qui comprennent chacun une bobine de chauffage par induction, le dispositif de réglage de la puissance de chauffage étant configuré pour modifier une fréquence de résonance du circuit oscillant respectif pour régler la puissance de chauffage, des signaux d'excitation de fréquence identiques étant appliqués sur les circuits oscillants respectifs.
